# EUROPEAN PATENT APPLICATION

(11) **EP 4 773 042 A1**
(43) Date of publication of application: **08.07.2026**
(21) Application number: 26150224.9
(22) Date of filing: 05.01.2026
(51) Int. Cl.: G06N 3/045, G06N 3/082, G06N 3/084

(54) **EMBEDDING PATCHES FOR LOCALIZED IMPROVEMENT OF EMBEDDINGS**

(30) Priority: 07.01.2025 US 202563742731 P
(71) Applicant: GOOGLE LLC, Mountain View CA 94043 (US)
(72) Inventor: Eban, Elad Edwin Tzvi, Mountain View, 94043 (US); Zielinski, Piotr, Mountain View, 94043 (US); Mackey, Alan, Mountain View, 94043 (US); Datsenko, Ekaterina, Mountain View, 94043 (US)
(74) Representative: Marks & Clerk GST

(57) **Abstract**

Provided are computer-implemented systems and methods which improve embedding generation model performance with respect to localized quality issues. In particular, the proposed techniques can operate to improve localized embedding model performance without incurring significant re-training costs and/or re-deployment costs associated with full model re-training.

## Description

### RELATED APPLICATION

The present application is a continuation of United States Provisional Application No. 63/742,731, having a filing date of January 07, 2025, which is hereby incorporated by reference herein in its entirety.

### FIELD

The present disclosure relates generally to machine learning. More particularly, the present disclosure relates to lightweight embedding patches that provide localized adjustments to the original embedding space to improve representation of targeted data subsets.

### BACKGROUND

In the field of machine learning, embedding generation models are models that, given data descriptive of an item (e.g., an image), can generate an embedding for the item. The embedding can be a vectorized numerical representation of complex, high-dimensional data in a more digestible, lower-dimensional space known as a latent space. Embedding generation models are used in numerous applications, including image retrieval and natural language processing tasks. However, embedding models often encounter challenges that can compromise their effectiveness and efficiency.

One significant issue is the occurrence of localized quality problems within specific subsets of data that are associated with or included in particular domains, sub-domains, verticals, or sub-verticals. For example, an embedding model trained on a broad range of images may perform well on common categories but might struggle with less common or more complex categories, displaying lower accuracy or coherence in these specific areas. This localized degradation in performance can limit the utility of the model in diverse real-world applications.

Addressing these localized issues typically includes re-training or fine-tuning the entire embedding generation model on a refined dataset that includes a higher representation of the underperforming categories. While this approach can improve performance in the targeted areas, it is not without drawbacks. Full model re-training is computationally expensive, often requiring substantial resources in terms of time and hardware. Additionally, fine-tuning a model to enhance performance in one area can inadvertently affect its performance in other areas-sometimes negatively. This phenomenon, known as the "catastrophic forgetting" problem, occurs when updates to the model overwrite or obscure previously-learned information that was unrelated to the current focus of training.

Moreover, substantial modifications to an embedding model can lead to issues of compatibility with other deployed system components. For example, if a model is significantly altered from its original version (e.g., via fine-tuning to improve performance in a particular sub-domain), the embeddings the model generates (and its latent space more generally) may no longer align with those generated by the earlier model, leading to inconsistencies and errors in downstream tasks such as retrieval or classification, which rely on stable and consistent embedding outputs. Thus, full re-training of a model may also necessitate re-configuring a large number of other system components that interact with the model.

### SUMMARY

Aspects and advantages of embodiments of the present disclosure will be set forth in part in the following description, or can be learned from the description, or can be learned through practice of the embodiments.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One general aspect includes a computer-implemented method for updating machine-learned embedding generation models with reduced computational cost. The computer-implemented method includes obtaining, by a computing system which may include one or more computing devices, a first embedding generation model that has been trained to generate embeddings for items in a first latent space; training, by the computing system, a second embedding generation model on a set of items associated with a particular subspace of the first latent space, where the second embedding generation model is configured to generate embeddings for items in a second, different latent space; training, by the computing system, an embedding emulation model to map embeddings output by the second embedding generation model in the second latent space to the first latent space; where training the embedding emulation model may include, for each of one or more items included in the set of items: processing, by the computing system, the item with the first embedding generation model to generate a first embedding for the item in the first latent space; processing, by the computing system, the item with the second embedding generation model and the embedding emulation model to generate a third embedding for the item in a third latent space; and modifying, by the computing system, one or more parameter values of the embedding emulation model based on one or more training loss functions that evaluate the first embedding and the third embedding. Other embodiments of this aspect include corresponding computer systems, apparatus, and computer programs recorded on one or more computer storage devices, each configured to perform the actions of the methods.

Implementations may include one or more of the following features. The computer-implemented method may include deploying, by the computing system, the second embedding generation model and the embedding emulation model into a production system containing the first embedding generation model. The first embedding generation model may include a generalist embedding generation model and the second embedding generation model may include a specialist embedding generation model. Training the second embedding generation model may include fine-tuning the first embedding generation model on the set of items to generate the second embedding model. The second embedding generation model may include the first embedding generation model adapted to include one or more parameter-efficient adapter layers. The set of items associated with the particular subspace of the first latent space may include in-domain items that are representative of a particular domain, sub-domain, vertical, or sub-vertical of items. The set of items further may include out-of-domain items that are unassociated with the particular subspace of the first latent space. The set of items may include 90-99% out of domain items and 1-10% in-domain items. The set of items may include a relative increase in a percentage of items that are associated with the particular subspace of the first latent space as compared to training data on which the first embedding generation model was trained. The one or more training loss function may include an L2 loss function that evaluates an L2 difference between the first embedding and the third embedding. The one or more training loss functions may include a KL divergence loss over probability distributions output by one or more classifiers when supplied with the first embedding and the third embedding, respectively. The one or more training loss functions may include a contrastive loss function that evaluates a relative difference between a first distance between the third embedding and a positive query embedding and a second distance between the third embedding and a negative query embedding. Implementations of the described techniques may include hardware, a method or process, or computer software on a computer-accessible medium.

One general aspect includes a computing system configured to generate embeddings for items. The computing system also includes one or more processors; and one or more non-transitory computer-readable media that collectively store computer-executable instructions for performing operations, the operations may include: obtaining item data descriptive of an item; processing the item data with a first embedding generation model to generate a first embedding for the item in a first latent space; processing the item data with a second embedding generation model to generate a second embedding for the item in a second latent space; processing the second embedding with a machine-learned embedding emulation model to generate a third embedding for the item in the first latent space; and generating an output embedding for the item based at least in part on the third embedding. Other embodiments of this aspect include corresponding computer systems, apparatus, and computer programs recorded on one or more computer storage devices, each configured to perform the actions of the methods.

Implementations may include one or more of the following features. The computing system, where generating the output embedding may include averaging the first embedding and the third embedding to generate the output embedding. Averaging the first embedding and the third embedding may include averaging the first embedding and the third embedding with equal weight. Averaging the first embedding and the third embedding may include adaptively averaging the first embedding and the third embedding with respective weight values that are determined based on a distance of one or both of the first embedding and the third embedding with respect to one or more representative points of a particular subspace of the first latent space. Averaging the first embedding and the third embedding may include first normalizing the first embedding and the third embedding. Generating the output embedding may include: determining a distance between the third embedding and one or more representative points of a particular subspace of the first latent space; when the distance between the third embedding and the one or more representative points satisfies a threshold value, providing the first embedding as the output embedding; and when the distance between the third embedding and the one or more representative points does not satisfy the threshold value, providing the third embedding as the output embedding. The threshold value may include a value that has been selected or machine-learned based on a validation dataset. Generating the output embedding may include processing the first embedding and the third embedding with a machine-learned merging layer to generate, as an output of the machine-learned merging layer, the output embedding. The operations further may include providing the output embedding to a downstream system, process, or model. Implementations of the described techniques may include hardware, a method or process, or computer software on a computer-accessible medium.

One general aspect includes one or more non-transitory computer-readable media that collectively store computer-executable instructions for performing operations. The operations include obtaining item data descriptive of an item; processing the item data with a first embedding generation model to generate a first embedding for the item in a first latent space, determining whether the first embedding is associated with a particular subspace of the first latent space, and in response to a first determination that the first embedding is not associated with the particular subspace of the first latent space: outputting the first embedding as an output embedding, or in response to a second determination that the first embedding is associated with the particular subspace of the first latent space: processing the item data with a second embedding generation model to generate a second embedding for the item in a second latent space, processing the second embedding with a machine-learned embedding emulation model to generate a third embedding for the item in the first latent space, and generating the output embedding for the item based at least in part on the third embedding. Other embodiments of this aspect include corresponding computer systems, apparatus, and computer programs recorded on one or more computer storage devices, each configured to perform the actions of the methods.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
Figure 1 depicts a block diagram that illustrates an example system for training according to example embodiments of the present disclosure.
Figure 2A depicts a block diagram that illustrates an example system for inference according to example embodiments of the present disclosure.
Figure 2B depicts a block diagram that illustrates an example system for inference according to example embodiments of the present disclosure.
Figure 3 depicts a flowchart diagram that illustrates an example method for training according to example embodiments of the present disclosure.
Figure 4 depicts a flowchart diagram that illustrates an example method for inference according to example embodiments of the present disclosure.
Figure 5A depicts a block diagram of an example computing system according to example embodiments of the present disclosure.
Figure 5B depicts a block diagram of an example computing device according to example embodiments of the present disclosure.
Figure 5C depicts a block diagram of an example computing device according to example embodiments of the present disclosure.
Figure 6 depicts a flow chart diagram of an example method for training a machine-learned model according to example embodiments of the present disclosure.
Figure 7 depicts a block diagram of an example processing flow for using machine-learned model(s) to process input(s) to generate output(s) according to example embodiments of the present disclosure.

Reference numerals that are repeated across plural figures are intended to identify the same features in various implementations.

### DETAILED DESCRIPTION

Example aspects of the present disclosure are directed to computer-implemented systems and methods which improve embedding generation model performance with respect to localized quality issues. In particular, the proposed techniques can operate to improve localized embedding model performance without incurring significant re-training costs and/or redeployment costs associated with full model re-training.

More particularly, an embedding model may be generally performant but may demonstrate performance limitations with respect to a particular location in its latent space that corresponds to a particular domain, sub-domain, vertical, or sub-vertical. For example, an image embedding model may demonstrate the ability to generate useful, accurate, or otherwise performant embeddings for a wide range of semantic content (e.g., airplanes, horses, and Japanese cuisine generally). However, the same model may demonstrate reduced performance for a specific domain, sub-domain, vertical, or sub-vertical. For example, while the model may generate high-quality embeddings for Japanese cuisine generally, the model may generate lower-quality embeddings for images that depict a specific subset of these concepts (e.g., specific sushi rolls such as salmon roll vs. smoked salmon roll vs. maki salmon vs. Philadelphia roll).

Certain existing approaches for improving such localized embedding performance issues include re-training or fine-tuning the entire embedding generation model. This approach, while effective in some cases, can be computationally expensive and may lead to unintended alterations in other areas of the embedding space. Furthermore, it can result in a model that is no longer compatible with the original model for retrieval or classification purposes.

In contrast, the present disclosure provides techniques for applying localized adjustments or "patches" to the original embedding space. These patches can enhance the representation of targeted data subsets without the need to retrain the entire model. For example, if the original embedding model misplaces images of "maki salmon" with "salmon roll" in a sushi dataset, the disclosed method can specifically adjust the embeddings related to sushi without altering the entire embedding structure that includes other semantic concepts (e.g., airplanes), and also while integrating with larger or surrounding concepts (e.g., Japanese cuisine generally).

Thus, one advantage of the proposed approach is the preservation of the original embedding model's utility while extending its accuracy and relevance to specific data subsets. This can be achieved by training both an expert model focused on the subset or domain and an emulation model that aligns the expert model's embeddings with the original embedding space. The emulation model ensures that the outputs remain compatible, allowing integration of the expert model with existing systems that rely on the original model.

These proposed techniques not only enhance the performance of embedding models in specific areas but also offers a more resource-efficient alternative to full model re-training. This allows for continuous updates and improvements in a targeted manner, which can be particularly beneficial in dynamic fields where data characteristics may shift over time. For instance, incremental updates can be applied to different data subsets (e.g., such as sushi images or other domain-specific content). Each incremental update can improve the model's performance in these specific areas without compromising overall compatibility.

More particularly, in the context of the described technology, the term "item" can refer to any item that can be represented and processed within a computational system. This includes, but is not limited to, digital images, text documents, audio files, video clips, and other forms of multimedia content. As other examples, "items" can include user profiles, user accounts, entities, product descriptions, and/or any other form of structured or unstructured data that can be subjected to embedding processes. Thus, embedding generation models and related systems are applicable across a wide range of fields and applications, from e-commerce and social media platforms to automated content management systems, information retrieval systems, and/or autonomous agentic systems. Thus, while example descriptions contained herein focus for the purpose of explication on embeddings generated for images, the systems and methods of the present disclosure are also applicable to embeddings generated for any other items, which may or may not include imagery.

In the context of machine learning and data processing, "embedding generation" refers to the transformation of high-dimensional data into an "embedding" expressed within lower-dimensional space. Embeddings make complex data more manageable and interpretable by computational models. This process can include mapping (e.g., by embedding generation models) items such as text, images, and/or other forms of data to embeddings expressed in a continuous vector space where similar items are positioned closer together, thereby preserving semantic or contextual relationships in a compact form. The term "latent space" describes this lower-dimensional space where embeddings reside. It is called "latent" because it captures underlying patterns and structures in the data that may not be immediately apparent in the original high-dimensional space. Latent spaces are advantageous for various machine learning tasks, including clustering, similarity searching, and recommendation systems, as they allow for efficient computation and meaningful interpretation of relationships within the data.

One aspect of the present disclosure is directed to techniques for updating machine-learned embedding generation models with reduced computational cost. In particular, in some implementations, a computing system can obtain a pre-existing first embedding generation model. This model has already been trained to generate embeddings for various items within a defined first latent space. For instance, this could include retrieving a model designed for image recognition, where the model is capable of converting input images into embedding vectors that represent the semantic content of the images in a multidimensional latent space.

The computing system can train a second embedding generation model specifically tailored for a particular subspace of the first latent space, where this subspace is associated with a distinct set of items. In some instances, this second embedding generation model can be referred to as an "expert" model, for example because it has been trained on a specific domain or sub-domain. For example, if the first model is trained on a broad range of images, the second model might focus exclusively on a subset such as images of sushi. This second model is designed to create embeddings in a new, different latent space that may capture more detailed or nuanced features relevant to sushi rolls that the broader model might overlook. However, the second embeddings in the second latent space will often not be integrated or compatible with embeddings or related deployment systems expressed in the first latent space.

In view of this challenge, and according to another aspect of the present disclosure, the computing system can train an embedding emulation model that maps the embeddings produced by the second embedding generation model from the second latent space back to the first latent space. This process ensures that the specialized embeddings, which are optimized for a specific subset of data, remain compatible with the broader applications and systems that operate using the first latent space. For instance, embeddings generated for sushi roll images in the specialized model can be seamlessly integrated into a generalist model that handles a diverse array of image types or content. This emulation not only preserves the utility of the original model but also enhances its accuracy by incorporating finely-tuned embeddings from the specialized model. The emulation model can be trained using various loss functions to minimize the difference between the original and emulated embeddings, thereby ensuring that the specialized embeddings function effectively within the broader system.

In some implementations, the training process for the embedding emulation model can include a number of steps to integrate the specialized embeddings into the first latent space. As one example, the computing system processes each item in a training dataset with the first embedding generation model to produce a first embedding in the first latent space. Subsequently, the same item is processed through the second embedding generation model, and the resulting embedding is then passed through the embedding emulation model to generate a third embedding in what can be considered a third latent space. This third embedding is aimed to be a transformed version of the second embedding, mapped back to the first latent space. To optimize this transformation, the computing system adjusts the parameters of the embedding emulation model based on the discrepancies between the first and third embeddings, using one or more training loss functions. In some examples, these loss functions, such as mean squared error or cosine similarity, measure the difference between the embeddings to iteratively refine the emulation model for greater accuracy and compatibility. For example, if the first and third embeddings diverge significantly for a subset of items, the parameters of the emulation model are modified to reduce this divergence, thereby improving the model's performance in integrating specialized embeddings into the general framework.

In some implementations, the process of training the second embedding generation model includes fine-tuning the first, more generalist embedding generation model using a specific subset of items. This fine-tuning adjusts the parameters of the original model to better suit the characteristics of the targeted data, effectively transforming it into the second, specialist model.

As one example, the first model can be adapted by incorporating one or more parameter-efficient adapter layers and then re-trained to generate the second model (e.g., re-trained by tuning only the adapter layers and keeping all other parameters of the model frozen or fixed). The adapter layers (e.g., LoRa adapter layers) are designed to enhance the model's performance on the specialized tasks without the need for extensive re-training or a complete overhaul of the original model's architecture. This approach not only conserves computational resources but also allows for the specialized model to remain relatively lightweight, particularly in terms of the number of parameters.

As another example, in some implementations, both the second embedding generation model and the accompanying emulation model can be trained on significantly smaller datasets compared to the extensive data requirements of the original generalist model. This targeted training approach facilitates quicker adaptations and updates, providing more efficient handling of specific data subsets while maintaining overall performance and compatibility with the first model.

In some implementations, the dataset used for training the second embedding generation model is curated to include a specific mix of in-domain and out-of-domain items. The in-domain items are those that are representative of a particular domain, sub-domain, vertical, or sub-vertical, which the specialist model is specifically intended to enhance, while out-of-domain images are not representative of or included such domain, sub-domain, vertical, or sub-vertical.

To provide an example, if the specialist model is focused on sushi rolls, the in-domain items might consist of various images of different types of sushi rolls. Conversely, out-of-domain items, which are unassociated with the sushi roll subspace (e.g., images of horses or airplanes), are also included in the training set. As one example, the dataset can include a majority of out-of-domain items (e.g., ranging from 90-99%, with the remaining 1-10% being in-domain items). This composition helps in fine-tuning the specialist model to focus on its target domain while still retaining the ability to generalize across broader data types. Thus, in some implementations, there is a relative increase in the percentage of in-domain items compared to the proportion used in training the original, generalist model. For example, if sushi rolls represent 1% of the new dataset, that still may be a relative increase as compared to the original dataset where images of sushi rolls may only represent 0.01% of the dataset.

The training of the embedding emulation model can use various combinations of one or loss functions to optimize the alignment between the first and third latent spaces. One example function is the L2 loss, which measures the Euclidean distance between the first embedding generated by the generalist model and the third embedding produced after emulation, aiming to minimize this difference. As another example, a Kullback-Leibler (KL) divergence loss can be employed to assess the discrepancy between probability distributions output by classifiers when provided with the first and third embeddings, respectively. This loss function helps ensure that the semantic integrity of the embeddings is maintained across transformations.

As yet another example, a contrastive loss function can be used which evaluates the relative difference between the distance of the third embedding to a positive embedding (e.g., a positive query or text embedding) and its distance to a negative embedding (e.g., a negative query or text embedding). The contrastive loss is particularly beneficial for enhancing the model's ability to distinguish between semantically similar and dissimilar items, thereby refining the overall quality and utility of the embeddings in various applications, such as image retrieval or recommendation systems.

In some implementations, after the successful training of the second embedding generation model and the embedding emulation model, these models can be deployed into a production system that already contains the first embedding generation model. This deployment integrates the newly developed models with the existing system, allowing the entire system to benefit from the enhanced capabilities of the specialized embeddings while maintaining the broad applicability of the original model. For example, in a real-world application such as an online image search platform, deploying these models would enable the platform to provide more accurate search results for specific categories, like sushi rolls, without compromising the search quality for other categories. Example techniques for deploying the newly-trained models are described in further detail below.

As one example, in some implementations, the first embedding generation model functions as a generalist model, designed to handle a wide variety of data types and provide broad applicability across numerous domains or categories. For instance, this model might be used to generate embeddings for a diverse array of images in an image recognition system. Conversely, the second embedding generation model operates as a specialist model, tailored to excel in a specific subset of the data handled by the generalist model. This could include focusing on a particular type of imagery, such as sushi rolls, architectural features, medical imaging, and/or various other domains or sub-domains, where specialized knowledge can significantly enhance the model's performance. The specialist model is trained to capture the unique characteristics and nuances of its target domain, thereby providing more precise and effective embeddings for those specific types of data. This bifurcation allows for enhanced performance in targeted areas without compromising the versatility of the generalist model.

More particularly, another example aspect of the present disclosure is directed to a computing system configured to use the trained and deployed models to generate embeddings for items at inference-time. As one example, a computing system can begin by obtaining item data descriptive of an item. This data is then processed through a first embedding generation model, which produces a first embedding in a primary latent space. Subsequently, the same item data is processed through a second, specialized embedding generation model, creating a second embedding in a distinct, secondary latent space. This second embedding is further processed by a machine-learned embedding emulation model, which adjusts and transforms the embedding back into the first latent space, resulting in a third embedding. Finally, the system generates an output embedding for the item. The output embedding may, e.g., in cases in which the item is included in a particular subspace of the first latent space, be based on or derived from this third, emulated embedding.

In particular, in some implementations, the process of generating the output embedding can include averaging the first and third embeddings. As one example, the averaging can be executed with equal weight for both embeddings, ensuring that both the generalist and specialist perspectives are equally represented in the final embedding output. For example, this technique can be performed when both embeddings are considered to have comparable relevance and accuracy in representing the item data.

In some implementations, before averaging, the first and third embeddings can be normalized. Normalization ensures that the embeddings are on a comparable scale, which can be advantageous for maintaining the integrity of the averaging process.

In some implementations, the computing system is configured to generate the output embedding by evaluating the relevance of the third embedding in relation to a specific subspace of the first latent space. This evaluation can include determining the distance between the third embedding and one or more representative points that define the particular subspace.

As one example, the averaging of the first and third embeddings can be adaptively managed based on specific criteria. For instance, the weights assigned to each of the first and third embeddings during the averaging process can be determined by assessing the distance of one or both of the first and third embeddings from one or more representative points within a particular subspace of the first latent space. These representative points can include centroids that summarize the subspace or individual embeddings contained within that subspace.

In particular, to further elaborate, if the measured distance between the first and/or third embedding and the representative point(s) of the subspace is smaller, indicating closer proximity or greater relevance to the subspace, then the weight assigned to the third embedding is increased. Conversely, if the distance is larger, suggesting less relevance, the weight given to the first embedding is enhanced. This method ensures that the more relevant embedding generation model, whether generalist or specialist, exerts greater influence on the final output. Thus, the adaptive averaging allows the system to dynamically prioritize one embedding over another based on their relevance to the specific context or domain.

As yet another example, depending on the distance between the first and/or third embedding and the representative point(s) of the subspace, the system may decide which embedding to directly provide as the output (e.g., with weighting 100%). For example, if the distance between the third embedding and the representative point(s) satisfies (e.g., is greater than) a predefined threshold value, indicating a low degree of relevance or compatibility, the system provides the first embedding as the output embedding. Conversely, if the distance does not meet the threshold (e.g., is less than the threshold), suggesting that the third embedding offers a better representation in the context of the current data processing task, the third embedding is selected as the output.

The threshold value used for this decision-making process can be selected or learned from a validation dataset. This dataset helps to calibrate the threshold, ensuring it accurately reflects the level of compatibility required between the embeddings and the subspace for optimal performance of downstream tasks. For example, in a scenario including image recognition, the threshold could be determined based on the performance of the embeddings in accurately classifying images within the subspace during the validation phase. This approach allows the system to dynamically adapt the output embedding based on contextual relevance.

In some implementations, the first embedding can be computed and evaluated before the second and third embeddings are computed. For example, the first embedding generated by the existing or generalist model can be evaluated to determine whether the input item is associated with or related to the particular subspace for which the expert model has been trained. If the input item is not associated with or related to the particular subspace, then the first embedding can simply be used. However, if the input item is associated with or related to the particular subspace, then the second and third embeddings can be computed and used as described herein. This approach can conserve computational resources by waiting to perform the computation of the second and third embeddings until it is deemed necessary or appropriate.

In some implementations, the present disclosure allows for the generation and utilization of multiple expert models or patches in parallel, each tailored to specific subset(s) of data or domain(s). This approach enables the system to dynamically select and apply the most relevant expert model based on the content of the input item. When an input item is received, the system analyzes its content (e.g., based on the first embedding) to determine the appropriate domain, and subsequently, the corresponding expert model or patch is activated to process the item. This ensures that each item is handled by the most specialized and relevant model. This capability not only enhances the performance of the system across various types of content but also streamlines the computational process by activating only the necessary models at any given time.

The systems and methods of the present disclosure provide a number of technical effects and benefits. As one example technical benefit, the technology described herein enhances the quality of embeddings, particularly for specific subsets of data that have previously exhibited lower performance. By applying localized adjustments to the embedding space, the technology refines the representation of these subsets, thereby improving the accuracy and effectiveness of embeddings, which may then be used in various downstream tasks such as classification, retrieval, and/or recommendation systems. For example, in an image recognition application, the technology can specifically improve the embeddings for less common categories of images (e.g., images of sushi rolls), ensuring that these images are more accurately recognized and classified.

As another example technical benefit, the proposed techniques significantly reduce the computational resources required to update embedding models. Unlike traditional methods that include re-training the entire model, the proposed techniques can apply lighter-weight patches to specific areas of the embedding model that require updates. This targeted approach not only conserves computational power but also reduces processing time. For instance, if a particular subset of data related to medical images requires refinement, the technology applies patches directly related to that subset, instead of re-training the model on the entire dataset of images. This method is beneficial as it avoids the unnecessary use of resources on parts of the model that are performing adequately.

As another technical effect and benefit, the proposed techniques maintain compatibility with existing systems that utilize the original embedding model. By making localized adjustments rather than extensive modifications, the updated model preserves its ability to function seamlessly with existing retrieval and classification systems. Stated differently, by mapping expert embeddings back into an existing latent space, existing system components (e.g., classifiers) that are configured to operate in or with embeddings from this latent space do not need to be updated. This compatibility helps in avoiding disruptions and maintains operational efficiency in ongoing processes. Obviating the need to update other system components (e.g., re-training classifiers) also reduces consumption of computational resources such as processor cycles, memory usage, network bandwidth, etc.

With reference now to the Figures, example embodiments of the present disclosure will be discussed in further detail.

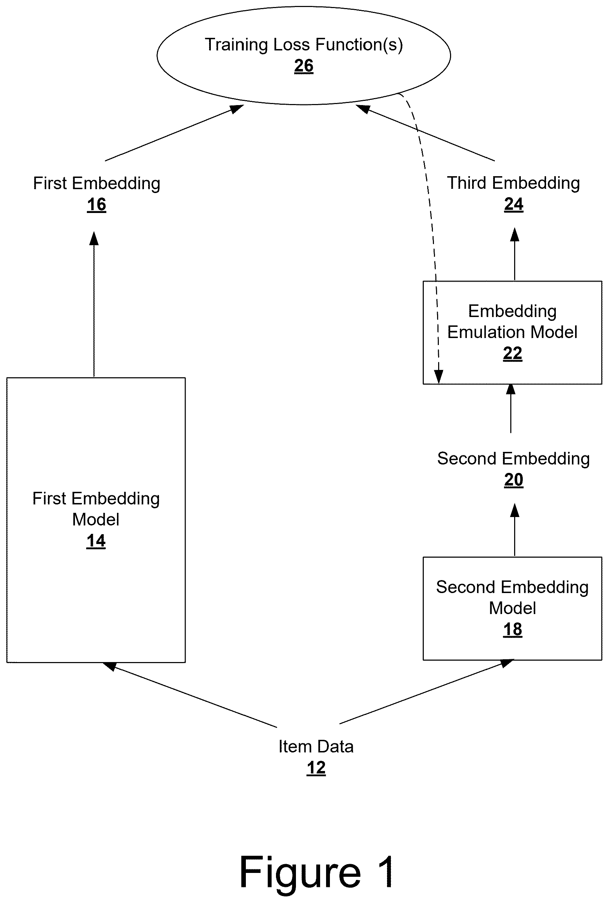

Figure 1 depicts a block diagram that illustrates an example system for training according to example embodiments of the present disclosure. Item data 12 in Figure 1 represents various types of data that are suitable for processing through embedding models. For instance, item data 12 can include digital images, text documents, audio files, or other multimedia content and/or any other feature data descriptive of any other item that needs to be transformed into a lower-dimensional vector representation.

First embedding model 14 processes the item data 12 to generate a first embedding 16. The first embedding model 14 can be a generalist embedding generation model which has been trained to generate embeddings for items in a first latent space, handling a broad range of data types and providing a versatile application across numerous domains or categories.

First embedding 16 is the vectorized output from the first embedding model 14, representing the item data 12 in the first latent space. This embedding can serve as a baseline representation for further processing or can be used directly for various downstream tasks such as classification or retrieval.

Second embedding model 18 receives the item data 12 and processes it to generate a second embedding 20. The second embedding model 18, which can be considered a specialist embedding generation model, can have been trained on a set of items associated with a particular subspace of the first latent space. This model is configured to generate embeddings for items in a second, different latent space, focusing on capturing detailed features relevant to one or more specific domains, sub-domains, verticals, or sub-verticals.

Second embedding 20 is the output from the second embedding model 18, representing the item data 12 in a specialized second latent space. This embedding generally enhances the representation of specific subsets of data or domains that are not adequately captured by the first embedding model 14.

Embedding emulation model 22 processes the second embedding 20 to produce a third embedding 24. The embedding emulation model 22 is trained to map the embeddings output by the second embedding generation model in the second latent space back to the first latent space. This mapping ensures that the specialized embeddings remain compatible with broader applications and systems that operate using the first latent space.

Third embedding 24, resulting from the processing by the embedding emulation model 22, represents an adjusted version of the second embedding 20, mapped back into the first latent space to ensure compatibility with systems using the first embedding model 14.

Training loss function(s) 26 are used to update the parameters of the embedding emulation model 22 (e.g., and optionally also the second embedding model 18). These functions can include an L2 loss function that evaluates the L2 difference between the embeddings, a KL divergence loss assessing the discrepancy between probability distributions, and/or a contrastive loss function that evaluates relative differences between distances in embeddings. These metrics help in minimizing the differences between the embeddings, ensuring that the third embedding 24 accurately reflects the characteristics of the item data 12 within the context of the first latent space while maintaining improved semantic descriptiveness. As one example, the loss function(s) 26 can be backpropagated to update the parameters of the embedding emulation model 22 (e.g., and optionally also the second embedding model 18), for example as shown by the dashed line.

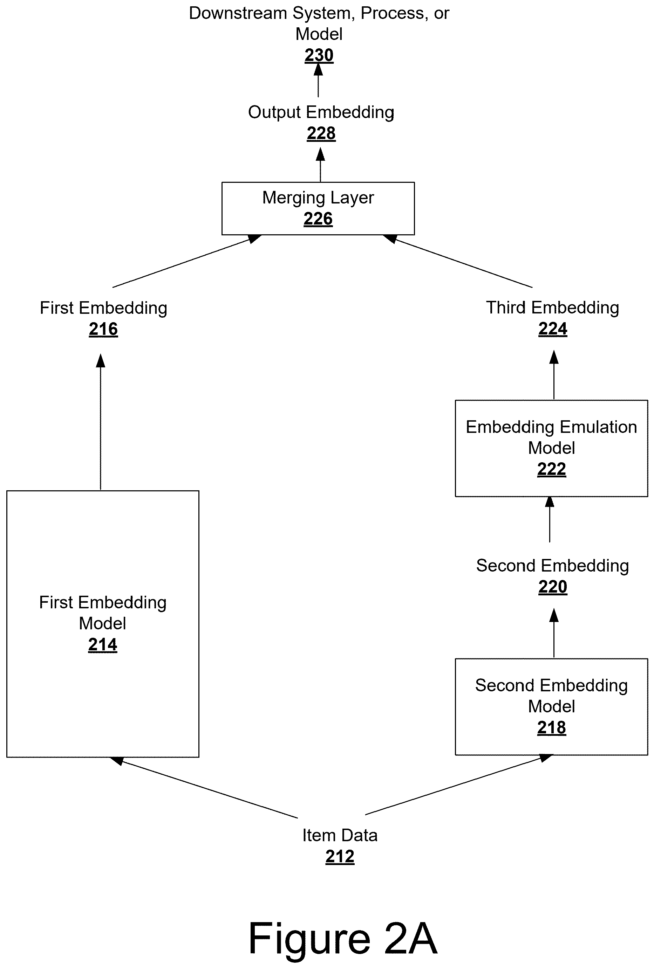

Figure 2A depicts a block diagram that illustrates an example system for inference according to example embodiments of the present disclosure. Item data 212 in Figure 2A represents various types of data suitable for embedding processes. For example, item data 212 can include digital images, text documents, audio files, or other multimedia content and/or any other feature data descriptive of any other item that needs to be transformed into a lower-dimensional vector representation.

First embedding model 214 processes the item data 212 to generate a first embedding 216. The first embedding model 214 is part of a computing system that includes one or more processors and one or more non-transitory computer-readable media. These media store computer-executable instructions for transforming high-dimensional item data into a more manageable form within a first latent space.

First embedding 216 is the output from the first embedding model 214, representing the item data 212 in the first latent space. This embedding serves as a baseline representation for further processing or can be used directly for various downstream tasks such as classification or retrieval.

Second embedding model 218 receives the item data 212 and processes it to generate a second embedding 220. The second embedding model 218 is trained on a set of items associated with a particular subspace of the first latent space and is configured to generate embeddings for items in a second, different latent space.

Second embedding 220 is the output from the second embedding model 218, representing the item data 212 in a specialized second latent space. This embedding is an improved representation of the item within the specific subsets of data or domains that are not adequately captured by the first embedding model 214.

Embedding emulation model 222 processes the second embedding 220 to produce a third embedding 224. The embedding emulation model 222 is trained to map the embeddings output by the second embedding generation model in the second latent space back to the first latent space.

Third embedding 224, resulting from the processing by the embedding emulation model 222, represents an adjusted version of the second embedding 220, mapped back into the first latent space to ensure compatibility with systems using the first embedding model 214.

Merging layer 226 processes both the first embedding 216 and the third embedding 224 to generate an output embedding 228. The merging layer 226 can employ various techniques including heuristics, logic, and/or learned parameterized operations. As one example, the merging layer 226 can perform operations such as averaging the embeddings with equal weight or adaptively averaging them based on the distance of the embeddings from one or more representative points of a particular subspace of the first latent space. This process may include normalizing the embeddings before averaging to ensure they are on a comparable scale.

Output embedding 228, as generated by the merging layer 226, is then provided to a downstream system, process, or model 230. This downstream entity utilizes the output embedding 228 for further applications, such as enhanced retrieval systems, personalized recommendation engines, or other data processing tasks that benefit from highly refined and contextually relevant embeddings.

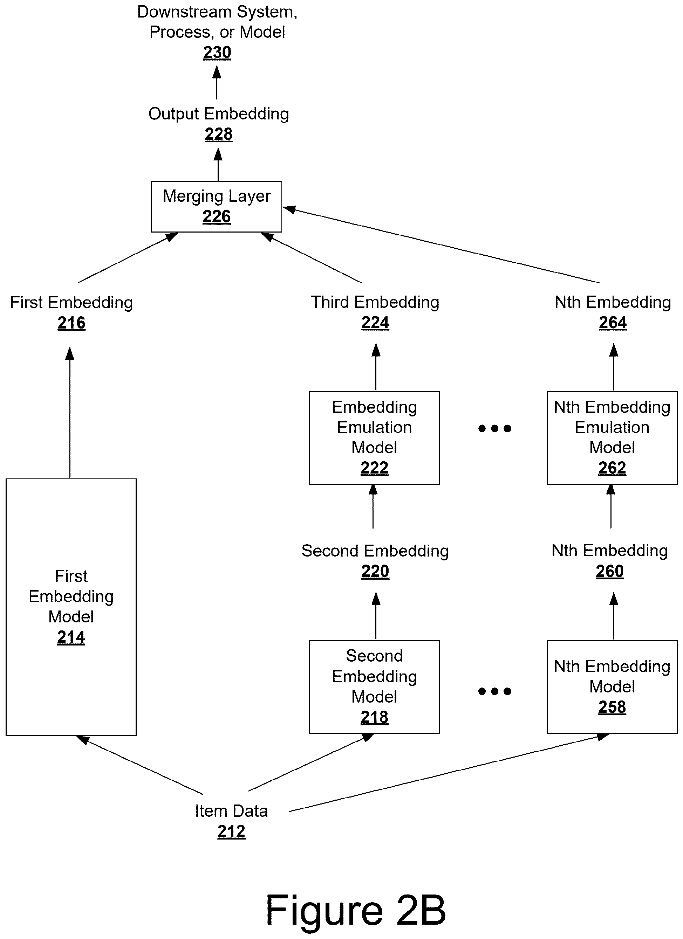

Figure 2B depicts a block diagram that illustrates an example system for inference according to example embodiments of the present disclosure. This diagram expands on the concept shown in Figure 2A by introducing multiple specialized embedding models, each tailored to different sub-domains (e.g., a first expert may focus on sushi rolls while an N-th expert may focus on dog breeds). The system shown in Figure 2B is scalable and capable of handling diverse domains or sub-domains simultaneously.

In this configuration, item data 212 is initially processed by the first embedding model 214, generating a first embedding 216 that provides a general representation of the item in the first latent space. Simultaneously, the same item data 212 is processed by a second embedding model 218 and an Nth embedding models 258, each designed for a specific sub-domain. For example, the second embedding model 218 could be specialized for sushi rolls, generating a second embedding 220, while the Nth embedding models 258 could be specialized for dog breeds, producing corresponding Nth embedding 260.

Each of these specialized embeddings are then processed by their respective emulation models, embedding emulation model 222 and Nth embedding emulation model 262. These emulation models are trained to map the embeddings from their specialized latent spaces back to the first latent space, ensuring that the specialized embeddings maintain compatibility with broader applications. This results in a third embedding 224 for sushi rolls and Nth embedding 264 for dog breeds, each adjusted to align with the generalist framework of the first embedding model 214.

The merging layer 226 integrates these various embeddings into a single output embedding 228. This merging process might involve techniques such as adaptively averaging the embeddings based on their relevance and accuracy in representing the specific sub-domains.

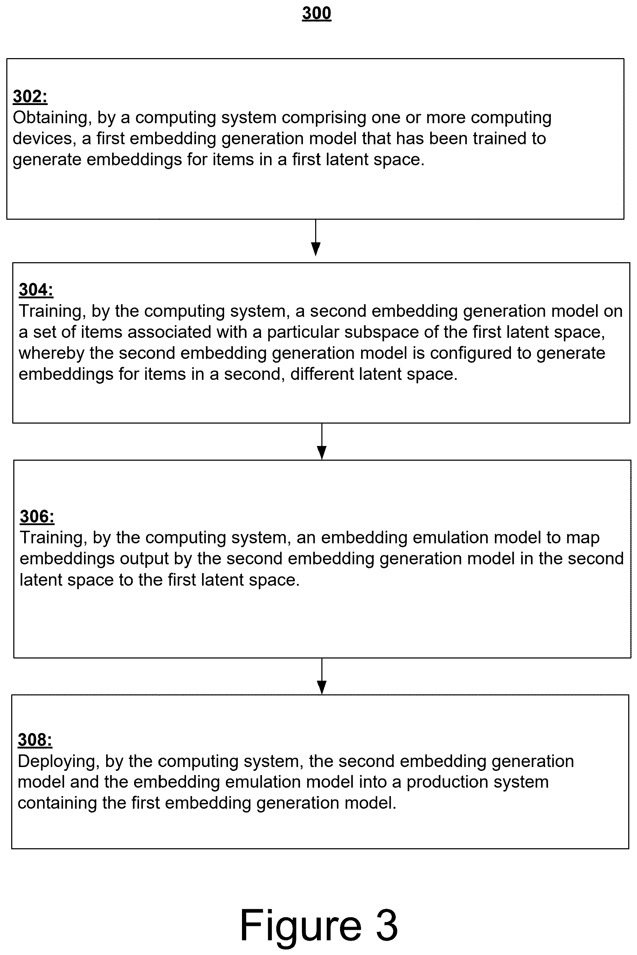

Figure 3 depicts a flowchart diagram that illustrates an example method 300 for training according to example embodiments of the present disclosure.

Step 302 can include obtaining, by a computing system comprising one or more computing devices, a first embedding generation model that has been trained to generate embeddings for items in a first latent space. The first embedding generation model 302 can be a neural network, a support vector machine, or any other suitable machine learning model capable of transforming high-dimensional data into a lower-dimensional vector representation.

Step 304 can include training, by the computing system, a second embedding generation model on a set of items associated with a particular subspace of the first latent space, whereby the second embedding generation model is configured to generate embeddings for items in a second, different latent space. The second embedding generation model 304 can specialize in a specific domain or sub-domain, enhancing the representation of these subsets within their respective latent spaces.

Step 306 can include training, by the computing system, an embedding emulation model to map embeddings output by the second embedding generation model in the second latent space to the first latent space. The embedding emulation model 306 ensures that the specialized embeddings remain compatible with broader applications and systems that operate using the first latent space. For example, step 306 can be performed as shown in Figure 1.

Finally, step 308 can include deploying, by the computing system, the second embedding generation model and the embedding emulation model into a production system containing the first embedding generation model. This step 308 facilitates the integration of the newly developed models with the existing system. For example, step 308 can be performed as shown in Figure 2A or 2B.

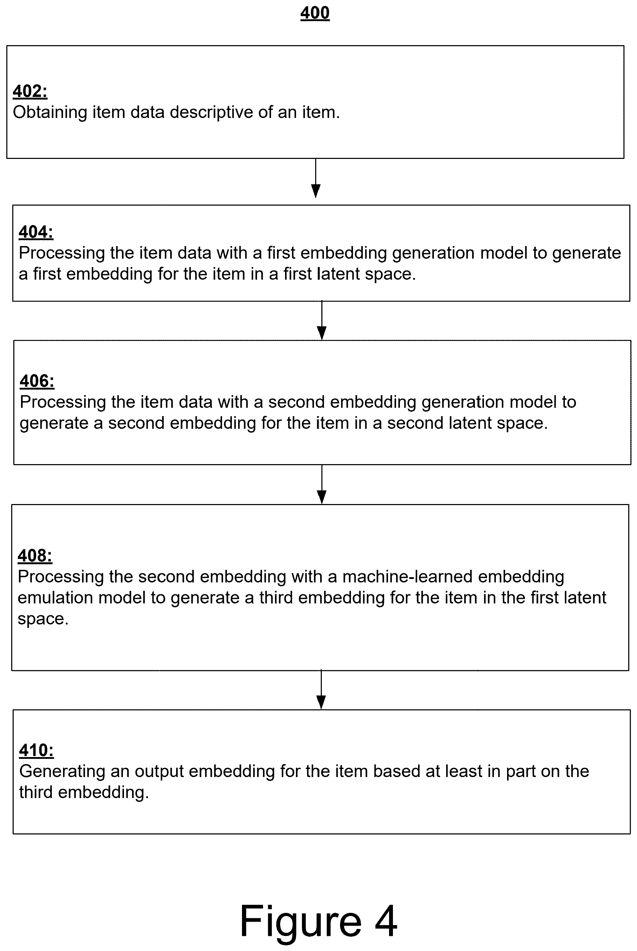

Figure 4 depicts a flowchart diagram that illustrates an example method 400 for inference according to example embodiments of the present disclosure.

Step 402 can include obtaining item data descriptive of an item. The item data 402 can include various types of data suitable for embedding processes, such as digital images, text documents, audio files, or other multimedia content and/or any other feature data descriptive of any other item. This data serves as the input for subsequent embedding generation processes.

Step 404 describes processing the item data with a first embedding generation model to generate a first embedding for the item in a first latent space. The first embedding generation model 404 can be a generalist model capable of handling a wide range of data types and providing broad applicability across numerous domains or categories. This model transforms the high-dimensional item data into a lower-dimensional vector representation within the first latent space.

Step 406 can include processing the item data with a second embedding generation model to generate a second embedding for the item in a second latent space. The second embedding generation model 406 can specialize in a specific domain or sub-domain, enhancing the representation of these subsets within their respective latent spaces. This model is configured to capture detailed features relevant to the specialized subset of data.

Step 408 depicts processing the second embedding with a machine-learned embedding emulation model to generate a third embedding for the item in the first latent space. The embedding emulation model 408 maps the embeddings output by the second embedding generation model from the second latent space back to the first latent space. This ensures that the specialized embeddings remain compatible with broader applications and systems that operate using the first latent space.

Finally, step 410 describes generating an output embedding for the item based at least in part on the third embedding. The output embedding 410 can, in some cases, integrate the refined features from the third embedding, providing a comprehensive representation of the item that is suitable for various downstream tasks such as classification, retrieval, or further data processing.

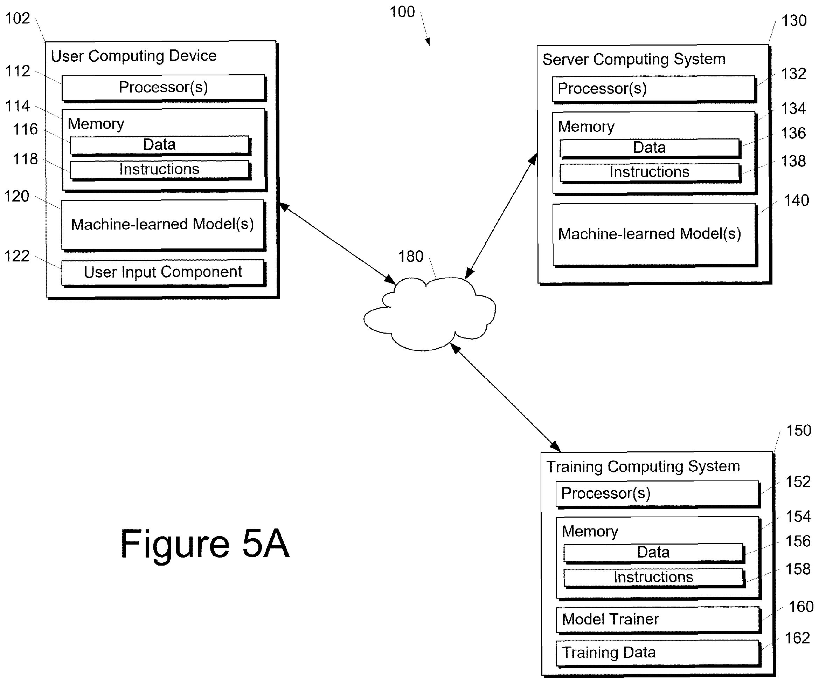

Figure 5A depicts a block diagram of an example computing system 100 according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as HBM, RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more embedding generation models 120. For example, the embedding generation models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Example embedding generation models 120 are discussed with reference to Figures 1-4.

In some implementations, the one or more embedding generation models 120 can be received from the server computing system 130 over network 180, stored in the user computing device memory 114, and then used or otherwise implemented by the one or more processors 112. In some implementations, the user computing device 102 can implement multiple parallel instances of a single embedding generation model 120 (e.g., to perform parallel embedding generation across multiple instances of item data).

Additionally or alternatively, one or more embedding generation models 140 can be included in or otherwise stored and implemented by the server computing system 130 that communicates with the user computing device 102 according to a client-server relationship. For example, the embedding generation models 140 can be implemented by the server computing system 130 as a portion of a web service (e.g., an embedding generation service). Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as HBM, RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more embedding generation models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 140 are discussed with reference to Figures 1-4.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as HBM, RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the embedding generation models 120 and/or 140 based on a set of training data 162. The training data 162 can include, for example, a mix of in-domain and out-of-domain item data.

In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as HBM, RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The machine-learned models described in this specification may be used in a variety of tasks, applications, and/or use cases.

In some implementations, the input to the machine-learned model(s) of the present disclosure can be image data. The machine-learned model(s) can process the image data to generate an output. As an example, the machine-learned model(s) can process the image data to generate an image recognition output (e.g., a recognition of the image data, a latent embedding of the image data, an encoded representation of the image data, a hash of the image data, etc.). As another example, the machine-learned model(s) can process the image data to generate an image segmentation output. As another example, the machine-learned model(s) can process the image data to generate an image classification output. As another example, the machine-learned model(s) can process the image data to generate an image data modification output (e.g., an alteration of the image data, etc.). As another example, the machine-learned model(s) can process the image data to generate an encoded image data output (e.g., an encoded and/or compressed representation of the image data, etc.). As another example, the machine-learned model(s) can process the image data to generate an upscaled image data output. As another example, the machine-learned model(s) can process the image data to generate a prediction output.

In some implementations, the input to the machine-learned model(s) of the present disclosure can be text or natural language data. The machine-learned model(s) can process the text or natural language data to generate an output. As an example, the machine-learned model(s) can process the natural language data to generate a language encoding output. As another example, the machine-learned model(s) can process the text or natural language data to generate a latent text embedding output. As another example, the machine-learned model(s) can process the text or natural language data to generate a translation output. As another example, the machine-learned model(s) can process the text or natural language data to generate a classification output. As another example, the machine-learned model(s) can process the text or natural language data to generate a textual segmentation output. As another example, the machine-learned model(s) can process the text or natural language data to generate a semantic intent output. As another example, the machine-learned model(s) can process the text or natural language data to generate an upscaled text or natural language output (e.g., text or natural language data that is higher quality than the input text or natural language, etc.). As another example, the machine-learned model(s) can process the text or natural language data to generate a prediction output.

In some implementations, the input to the machine-learned model(s) of the present disclosure can be speech data. The machine-learned model(s) can process the speech data to generate an output. As an example, the machine-learned model(s) can process the speech data to generate a speech recognition output. As another example, the machine-learned model(s) can process the speech data to generate a speech translation output. As another example, the machine-learned model(s) can process the speech data to generate a latent embedding output. As another example, the machine-learned model(s) can process the speech data to generate an encoded speech output (e.g., an encoded and/or compressed representation of the speech data, etc.). As another example, the machine-learned model(s) can process the speech data to generate an upscaled speech output (e.g., speech data that is higher quality than the input speech data, etc.). As another example, the machine-learned model(s) can process the speech data to generate a textual representation output (e.g., a textual representation of the input speech data, etc.). As another example, the machine-learned model(s) can process the speech data to generate a prediction output.

In some implementations, the input to the machine-learned model(s) of the present disclosure can be latent encoding data (e.g., a latent space representation of an input, etc.). The machine-learned model(s) can process the latent encoding data to generate an output. As an example, the machine-learned model(s) can process the latent encoding data to generate a recognition output. As another example, the machine-learned model(s) can process the latent encoding data to generate a reconstruction output. As another example, the machine-learned model(s) can process the latent encoding data to generate a search output. As another example, the machine-learned model(s) can process the latent encoding data to generate a reclustering output. As another example, the machine-learned model(s) can process the latent encoding data to generate a prediction output.

In some implementations, the input to the machine-learned model(s) of the present disclosure can be statistical data. Statistical data can be, represent, or otherwise include data computed and/or calculated from some other data source. The machine-learned model(s) can process the statistical data to generate an output. As an example, the machine-learned model(s) can process the statistical data to generate a recognition output. As another example, the machine-learned model(s) can process the statistical data to generate a prediction output. As another example, the machine-learned model(s) can process the statistical data to generate a classification output. As another example, the machine-learned model(s) can process the statistical data to generate a segmentation output. As another example, the machine-learned model(s) can process the statistical data to generate a visualization output. As another example, the machine-learned model(s) can process the statistical data to generate a diagnostic output.

In some implementations, the input to the machine-learned model(s) of the present disclosure can be sensor data. The machine-learned model(s) can process the sensor data to generate an output. As an example, the machine-learned model(s) can process the sensor data to generate a recognition output. As another example, the machine-learned model(s) can process the sensor data to generate a prediction output. As another example, the machine-learned model(s) can process the sensor data to generate a classification output. As another example, the machine-learned model(s) can process the sensor data to generate a segmentation output. As another example, the machine-learned model(s) can process the sensor data to generate a visualization output. As another example, the machine-learned model(s) can process the sensor data to generate a diagnostic output. As another example, the machine-learned model(s) can process the sensor data to generate a detection output.

In some cases, the machine-learned model(s) can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g. one or more images or videos), the output comprises compressed visual data, and the task is a visual data compression task. In another example, the task may comprise generating an embedding for input data (e.g. input audio or visual data).

In some cases, the input includes visual data and the task is a computer vision task. In some cases, the input includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

Figure 5A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

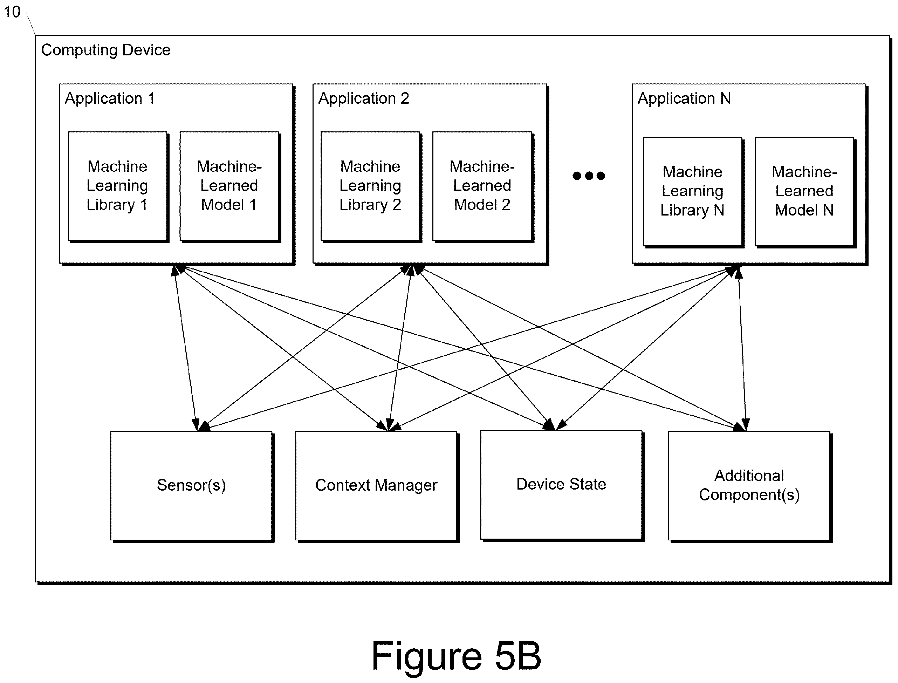

Figure 5B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 5B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

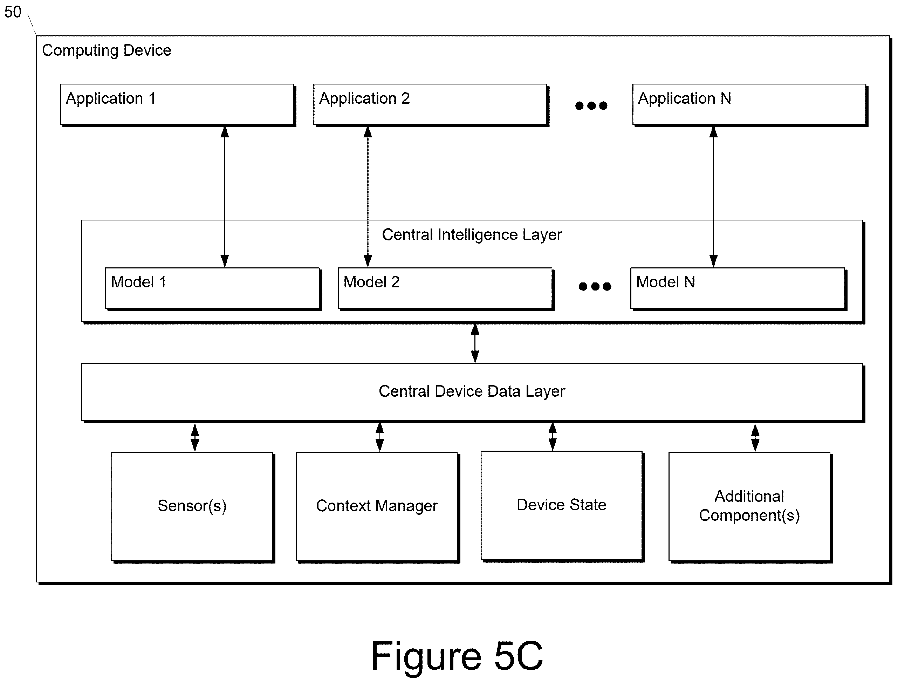

Figure 5C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 5C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 5C, the central device data layer can communicate with a number of other components of the computing device, such as, for example, one or more sensors, a context manager, a device state component, and/or additional components. In some implementations, the central device data layer can communicate with each device component using an API (e.g., a private API).

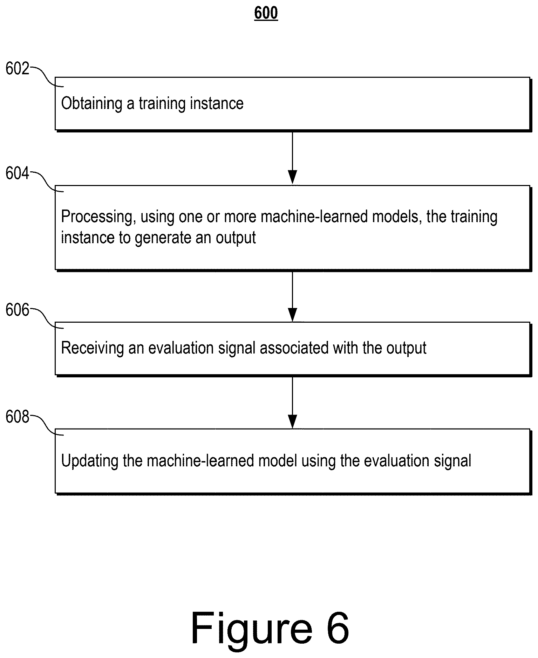

Figure 6 depicts a flowchart of a method 600 for training one or more machine-learned models according to aspects of the present disclosure. For instance, an example machine-learned model can include an embedding generation model.

One or more portion(s) of example method 600 can be implemented by a computing system that includes one or more computing devices such as, for example, computing systems described with reference to the other figures. Each respective portion of example method 600 can be performed by any (or any combination) of one or more computing devices. Moreover, one or more portion(s) of example method 600 can be implemented on the hardware components of the device(s) described herein, for example, to train one or more systems or models. Figure 6 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 6 is described with reference to elements/terms described with respect to other systems and figures for exemplary illustrated purposes and is not meant to be limiting. One or more portions of example method 600 can be performed additionally, or alternatively, by other systems.

At 602, example method 600 can include obtaining a training instance. A set of training data can include a plurality of training instances divided between multiple datasets (e.g., a training dataset, a validation dataset, or testing dataset). A training instance can be labeled or unlabeled. Although referred to in example method 600 as a "training" instance, it is to be understood that runtime inferences can form training instances when a model is trained using an evaluation of the model's performance on that runtime instance (e.g., online training/learning). Example data types for the training instance and various tasks associated therewith are described throughout the present disclosure.

At 604, example method 600 can include processing, using one or more machine-learned models, the training instance to generate an output. The output can be directly obtained from the one or more machine-learned models or can be a downstream result of a chain of processing operations that includes an output of the one or more machine-learned models.

At 606, example method 600 can include receiving an evaluation signal associated with the output. The evaluation signal can be obtained using a loss function. Various determinations of loss can be used, such as mean squared error, likelihood loss, cross entropy loss, hinge loss, contrastive loss, or various other loss functions. The evaluation signal can be computed using known ground-truth labels (e.g., supervised learning), predicted or estimated labels (e.g., semi- or self-supervised learning), or without labels (e.g., unsupervised learning). The evaluation signal can be a reward (e.g., for reinforcement learning). The reward can be computed using a machine-learned reward model configured to generate rewards based on output(s) received. The reward can be computed using feedback data describing human feedback on the output(s).

At 608, example method 600 can include updating the machine-learned model using the evaluation signal. For example, values for parameters of the machine-learned model(s) can be learned, in some embodiments, using various training or learning techniques, such as, for example, backwards propagation. For example, the evaluation signal can be backpropagated from the output (or another source of the evaluation signal) through the machine-learned model(s) to update one or more parameters of the model(s) (e.g., based on a gradient of the evaluation signal with respect to the parameter value(s)). For example, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. Example method 600 can include implementing a number of generalization techniques (e.g., weight decays, dropouts, etc.) to improve the generalization capability of the models being trained.

In some implementations, example method 600 can be implemented for training a machine-learned model from an initialized state to a fully trained state (e.g., when the model exhibits a desired performance profile, such as based on accuracy, precision, recall, etc.).

In some implementations, example method 600 can be implemented for particular stages of a training procedure. For instance, in some implementations, example method 600 can be implemented for pre-training a machine-learned model. Pre-training can include, for instance, large-scale training over potentially noisy data to achieve a broad base of performance levels across a variety of tasks/data types.

In some implementations, example method 600 can be implemented for fine-tuning a machine-learned model. Fine-tuning can include, for instance, smaller-scale training on higher-quality (e.g., labeled, curated, etc.) data. Fine-tuning can affect all or a portion of the parameters of a machine-learned model. For example, various portions of the machine-learned model can be "frozen" for certain training stages. For example, parameters associated with an embedding space can be "frozen" during fine-tuning (e.g., to retain information learned from a broader domain(s) than present in the fine-tuning dataset(s)). In some implementations, example method 600 uses adapter modules. Adapters can be small trainable layers that are inserted between pre-existing layers of a pre-trained model. During the fine-tuning process, the original parameters of the pre-trained model are typically frozen, and only the parameters of the adapters are updated.

In some implementations, example method 600 can be implemented to execute parameter-efficient fine-tuning methods, such as Low-Rank Adaptation (LoRA). LoRA can refine pre-trained models with minimal adjustments to the original parameters. This can be achieved by introducing trainable low-rank matrices that modify the behavior of the pre-trained weights without directly altering them. In some implementations, during fine-tuning, only these auxiliary matrices are updated, which significantly reduces the number of parameters that are trained.

An example fine-tuning approach includes reinforcement learning. Reinforcement learning can be based on user feedback on model performance during use.

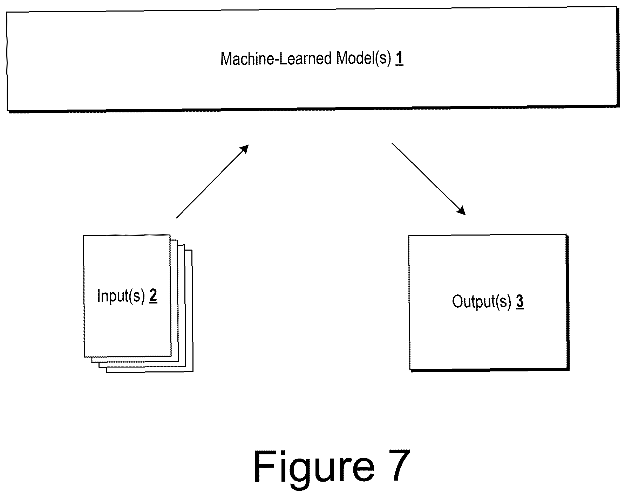

Figure 7 is a block diagram of an example processing flow for using machine-learned model(s) 1 to process input(s) 2 to generate output(s) 3.

Machine-learned model(s) 1 can be or include one or multiple machine-learned models or model components. Example machine-learned models can include neural networks (e.g., deep neural networks). Example machine-learned models can include non-linear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Machine-learned model(s) 1 can be or include, or otherwise be representative of any one or more of the machine-learned models described above with respect to the preceding figures. For example, machine-learned model(s) 1 can be or include, or otherwise be representative of any one or more of embedding models, embedding emulation models, embedding generation models, etc. Although various features, variations, and implementations described below are described with respect to machine-learned model(s) 1, it is to be understood that such features, variations, and implementations are to be understood as described with respect to each of embedding models, embedding emulation models, embedding generation models, etc., any other machine-learned component described herein.

Example neural networks can include feed-forward neural networks, recurrent neural networks (RNNs), including long short-term memory (LSTM) based recurrent neural networks, convolutional neural networks (CNNs), diffusion models, generative-adversarial networks, or other forms of neural networks. Example neural networks can be deep neural networks. Some example machine-learned models can leverage an attention mechanism such as self-attention or cross attention. For example, some example machine-learned models can include multi-headed self-attention models, multi-query self-attention models, or other attention mechanisms.

Machine-learned model(s) 1 can include a single or multiple instances of the same model configured to operate on data from input(s) 2. Machine-learned model(s) 1 can include multiple different models or multiple different model portions configured to operate on data from input(s) 2.

Machine-learned model(s) 1 can include an ensemble of different models that can cooperatively interact to process data from input(s) 2. For example, a model ensemble can include multiple models that have different attributes (e.g., different architectures, trained with different recipes, etc.). The ensemble can output an overall output based on the individual outputs of the constituent models. In this manner, for instance, the diverse constituent models can work together to provide system-level robustness by effectively aggregating over individual strengths and weaknesses of any given model. The respective individual outputs can be combined in a weighted combination, using a voting or routing mechanism, or a learned output layer (e.g., one or more feedforward or fully-connected layers).

Machine-learned model(s) 1 can employ a mixture-of-experts structure. *See, e.g.,* Zhou et al., Mixture-of-Experts with Expert Choice Routing, ARXIV:2202.09368v2 (Oct. 14, 2022). For example, different portions of a model can learn (explicitly or implicitly) different expertise areas, with pathways through the model being selected by a learned routing mechanism that engages the appropriate expert for a given input (e.g., a given portion of an input, such as on a per-token basis). For example, a feedforward network can be sparsely activated for a given portion of an input based on an output of a routing mechanism that processes the portion of the input. In this manner, for instance, the group of activated weights can form an "expert" that is selected by the router. On each forward pass, only a subset of the total model weights may be engaged, thereby decreasing a quantity of operations performed for processing a given input compared to a densely activated model. In this manner, for instance, the expressive and interpretive power of a high-parameter-count model can be achieved with more compute-efficient forward passes.

Input(s) 2 can generally include or otherwise represent various types of data. Input(s) 2 can include one type or many different types of data. Output(s) 3 can be data of the same type(s) or of different types of data as compared to input(s) 2. Output(s) 3 can include one type or many different types of data.

Example data types for input(s) 2 or output(s) 3 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 2 or outputs 3, example combinations of data types include image data and audio data, image data and natural language data, natural language data and software code data, image data and biometric data, sensor data and medical data, etc. It is to be understood that any combination of data types in an input 2 or an output 3 can be present.

An example input 2 can include one or multiple data types, such as the example data types noted above. An example output 3 can include one or multiple data types, such as the example data types noted above. The data type(s) of input 2 can be the same as or different from the data type(s) of output 3. It is to be understood that the example data types noted above are provided for illustrative purposes only. Data types contemplated within the scope of the present disclosure are not limited to those examples noted above.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A computer-implemented method for updating machine-learned embedding generation models with reduced computational cost, the method comprising:
obtaining, by a computing system comprising one or more computing devices, a first embedding generation model that has been trained to generate embeddings for items in a first latent space;
training, by the computing system, a second embedding generation model on a set of items associated with a particular subspace of the first latent space, whereby the second embedding generation model is configured to generate embeddings for items in a second, different latent space;
training, by the computing system, an embedding emulation model to map embeddings output by the second embedding generation model in the second latent space to the first latent space;
wherein training the embedding emulation model comprises, for each of one or more items included in the set of items:
processing, by the computing system, the item with the first embedding generation model to generate a first embedding for the item in the first latent space;
processing, by the computing system, the item with the second embedding generation model and the embedding emulation model to generate a third embedding for the item in a third latent space; and
modifying, by the computing system, one or more parameter values of the embedding emulation model based on one or more training loss functions that evaluate the first embedding and the third embedding.

2. The computer-implemented method of any preceding claim, further comprising deploying, by the computing system, the second embedding generation model and the embedding emulation model into a production system containing the first embedding generation model.

3. The computer-implemented method of any preceding claim, wherein the first embedding generation model comprises a generalist embedding generation model and the second embedding generation model comprises a specialist embedding generation model.

4. The computer-implemented method of any preceding claim, wherein training the second embedding generation model comprises fine-tuning the first embedding generation model on the set of items to generate the second embedding model.

5. The computer-implemented method of any preceding claim, wherein the second embedding generation model comprises the first embedding generation model adapted to include one or more parameter-efficient adapter layers.

6. The computer-implemented method of any preceding claim, wherein the set of items associated with the particular subspace of the first latent space comprises in-domain items that are representative of a particular domain, sub-domain, vertical, or sub-vertical of items.

7. The computer-implemented method of any preceding claim, wherein the set of items further comprises out-of-domain items that are unassociated with the particular subspace of the first latent space.

8. The computer-implemented method of any preceding claim, wherein the set of items comprises 90-99% out of domain items and 1-10% in-domain items.

9. The computer-implemented method of any preceding claim, wherein the set of items comprises a relative increase in a percentage of items that are associated with the particular subspace of the first latent space as compared to training data on which the first embedding generation model was trained.

10. The computer-implemented method of any preceding claim, wherein the one or more training loss functions comprise an L2 loss function that evaluates an L2 difference between the first embedding and the third embedding.

11. The computer-implemented method of any preceding claim, wherein the one or more training loss functions comprise a KL divergence loss over probability distributions output by one or more classifiers when supplied with the first embedding and the third embedding, respectively.

12. The computer-implemented method of any preceding claim, wherein the one or more training loss functions comprise a contrastive loss function that evaluates a relative difference between a first distance between third embedding and a positive query embedding and a second distance between the third embedding and a negative query embedding.

13. A computing system configured to generate embeddings for items, the computing system comprising:
one or more processors; and
one or more non-transitory computer-readable media that collectively store computer-executable instructions for performing operations, the operations comprising:
obtaining item data descriptive of an item;
processing the item data with a first embedding generation model to generate a first embedding for the item in a first latent space;
processing the item data with a second embedding generation model to generate a second embedding for the item in a second latent space;
processing the second embedding with a machine-learned embedding emulation model to generate a third embedding for the item in the first latent space; and
generating an output embedding for the item based at least in part on the third embedding.

14. The computing system of claim 13 or any following claim, wherein generating the output embedding comprises averaging the first embedding and the third embedding to generate the output embedding.

15. One or more non-transitory computer-readable media that collectively store computer-executable instructions for performing operations, the operations comprising:
obtaining item data descriptive of an item;
processing the item data with a first embedding generation model to generate a first embedding for the item in a first latent space;
determining whether the first embedding is associated with a particular subspace of the first latent space; and
in response to a first determination that the first embedding is not associated with the particular subspace of the first latent space: outputting the first embedding as an output embedding; or
in response to a second determination that the first embedding is associated with the particular subspace of the first latent space:
processing the item data with a second embedding generation model to generate a second embedding for the item in a second latent space;
processing the second embedding with a machine-learned embedding emulation model to generate a third embedding for the item in the first latent space; and
generating the output embedding for the item based at least in part on the third embedding.
